# EUROPEAN PATENT APPLICATION

(11) **EP 4 664 729 A1**
(43) Date of publication of application: **17.12.2025**
(21) Application number: 23921293.9
(22) Date of filing: 10.11.2023
(51) Int. Cl.: H02K 7/14, F04D 29/58, H02K 9/22

(54) **MOTOR UNIT, BLOWER AND MOVING BODY**

(30) Priority: 09.02.2023 JP 2023018651
(71) Applicant: Panasonic Intellectual Property Management Co., Ltd., Kadoma-shi, Osaka 571-0057 (JP)
(72) Inventor: KOYAMA Sho, Osaka 571-0057 (JP)
(74) Representative: SSM Sandmair
(86) International application number: PCT/JP2023/040583
(87) International publication number: WO 2024/166472

(57) **Abstract**

A motor unit is a motor unit for rotationally driving a centrifugal fan, and includes a rotor, a stator facing the rotor, a circuit board configured to control energization of the stator, and a motor case that houses the rotor, the stator, and the circuit board. The motor case includes a member constituting an air duct between the motor case and the centrifugal fan. At least a part of the member constituting the air duct is a thermally conductive portion that comes into contact with the circuit board in a thermally conductive manner.

## Description

### TECHNICAL FIELD

The present disclosure relates to a motor unit, a blower, and a moving body.

### BACKGROUND ART

In related art, a blower including a centrifugal fan provided in a moving body such as an automobile has been known. This type of blower includes a fan unit and a motor unit mounted on the fan unit (see PTL 1).

The fan unit includes a centrifugal fan and a fan case. The fan unit houses the centrifugal fan in the fan case. The motor unit includes a rotor, a stator, and a motor case. The motor unit houses the rotor and the stator in the motor case.

In the blower described above, in recent years, an increasing increase in output has been demanded. As the output of the blower increases, heat generation of the motor unit becomes a problem.

### Citation List

### Patent Literature

PTL 1: PCT International Publication No. 2016/059776

### SUMMARY OF THE INVENTION

An object of the present disclosure is to enhance heat dissipation of a motor unit.

A motor unit according to one aspect of the present disclosure is a motor unit for rotationally driving a centrifugal fan, and includes a rotor, a stator facing the rotor, a circuit board configured to control energization of the stator, and a motor case that houses the rotor, the stator, and the circuit board. The motor case includes a member constituting an air duct between the motor case and the centrifugal fan. At least a part of the member constituting the air duct is a thermally conductive portion that comes into contact with the circuit board in a thermally conductive manner.

The thermally conductive portion is preferably a metal portion.

Preferably, the motor unit further includes an insulating member disposed between the circuit board and the metal portion, and the metal portion is in contact with the circuit board, via the insulating member, in the thermally conductive manner.

A hole from which a part of the circuit board is exposed is provided in the motor case.

Preferably, the member constituting the air duct includes the metal portion and a resin portion provided integrally with the metal portion.

Preferably, the metal portion constitutes a portion of the member constituting the air duct on a radially inner side.

Preferably, the motor unit further includes a bearing that rotatably supports the rotor, and a part of the metal portion constitutes a metallic holder that holds the bearing.

A blower according to another aspect of the present disclosure includes the motor unit, the centrifugal fan rotationally driven by the rotor, and a fan case that rotatably houses the centrifugal fan.

Preferably, the blower further includes an auxiliary air duct connected to the air duct, and the auxiliary air duct is disposed between the motor case and the fan case.

The motor case may have a hole from which a part of the circuit board is exposed is disposed in the motor case, and the auxiliary air duct is disposed between a portion of the motor case where the hole is not disposed and the fan case.

The motor case may have a hole from which a part of the circuit board is exposed is disposed in the motor case, and the hole is covered with the fan case.

A moving body according to another aspect of the present disclosure includes the blower, a cooling target object to be cooled by the blower, and a vehicle body where the blower and the cooling target object are mounted.

The present disclosure has an effect of enhancing the heat dissipation of the motor unit.

### BRIEF DESCRIPTION OF THE DRAWINGS

Fig. 1 is a front view of a blower according to an exemplary embodiment.
Fig. 2 is a sectional view taken along line A-A in Fig. 1.
Fig. 3 is an enlarged view of a main part of Fig. 2.
Fig. 4 is an exploded perspective view of the blower.
Fig. 5 is a rear view of a fan case included in the blower.
Fig. 6 is a perspective view of a first member and a circuit board included in the blower.
Fig. 7 is a perspective view of a metal portion included in the first member included in the blower.
Fig. 8 is a conceptual diagram of a moving body on which the blower is mounted.

### DESCRIPTION OF EMBODIMENT

Exemplary embodiments and modifications to be described below are merely examples of the present disclosure. The present disclosure is not limited to the following exemplary embodiments and modifications. Besides the exemplary embodiments and modifications, the present disclosure can be modified in various manners in accordance with design and the like without deviating from the technical idea of the present disclosure. Configurations of the modifications can be appropriately combined.

### (1) Exemplary embodiment

Blower 1 according to an exemplary embodiment will be described in detail with reference to the accompanying drawings. Blower 1 is suitably mounted on moving body 9 such as an automobile. Blower 1 can also be mounted on other devices such as home appliances.

### (1-1) Overall structure of blower

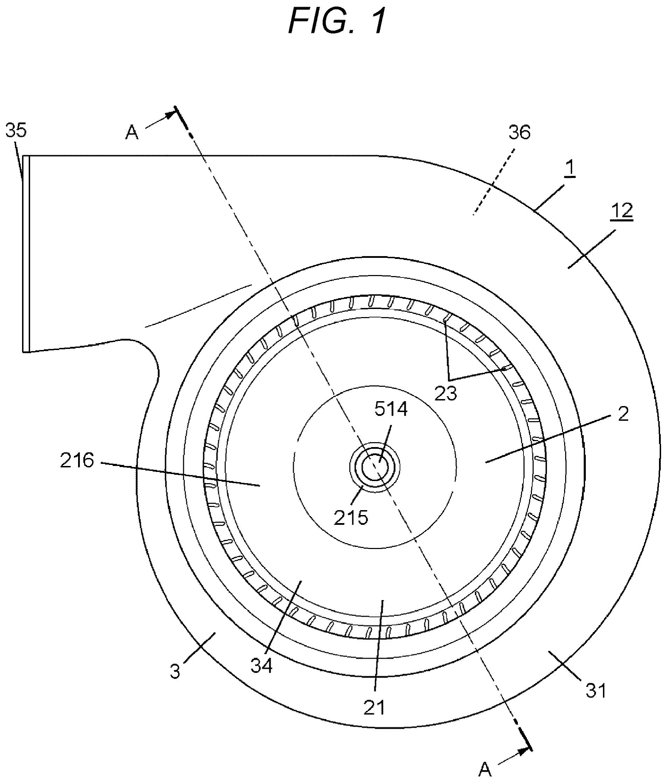

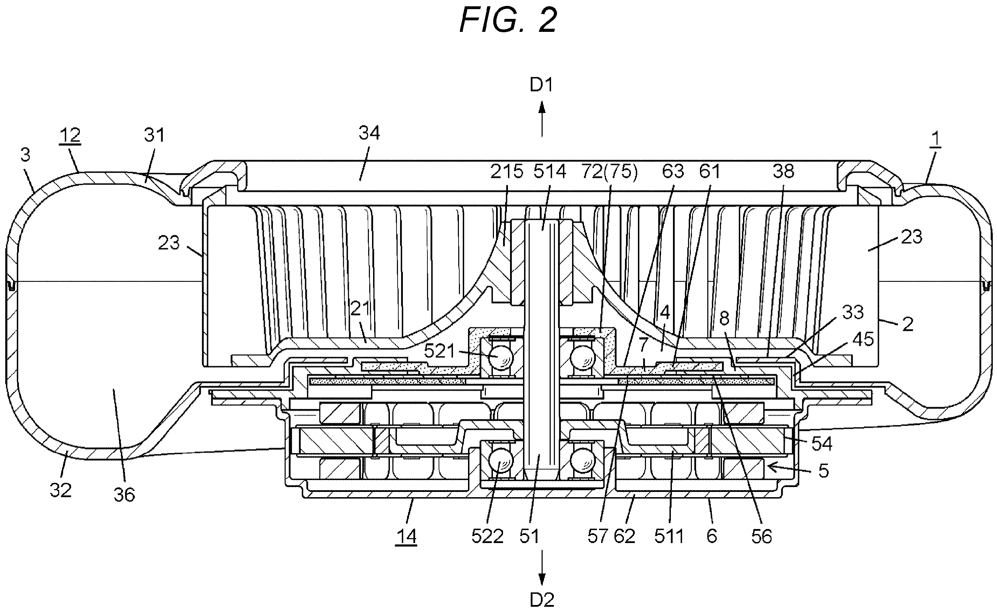

Fig. 1 is a front view of blower 1 according to the exemplary embodiment. Fig. 2 is a sectional view taken along line A-A in Fig. 1. As illustrated in Figs. 1 and 2 and the like, blower 1 includes fan unit 12 and motor unit 14.

Fan unit 12 and motor unit 14 are integrally assembled. As viewed from an axial direction of fan unit 12, motor unit 14 has a smaller outer shape than fan unit 12. In other words, the axial direction of fan unit 12 is a direction along an axis of centrifugal fan 2 included in fan unit 12.

In a state where fan unit 12 and motor unit 14 are integrally assembled, the axis of centrifugal fan 2 coincides with an axis of rotary shaft 514 included in motor unit 14. Hereinafter, a state where fan unit 12 and motor unit 14 are integrally assembled is referred to as an assembled state.

Fan unit 12 is a centrifugal fan unit. Fan unit 12 is configured to take in air along the axis of centrifugal fan 2 and discharge air in a direction intersecting the axis of centrifugal fan 2 (in the exemplary embodiment, in a direction orthogonal to the axis of centrifugal fan 2). An orientation in which motor unit 14 is positioned with respect to fan unit 12 coincides with an orientation in which fan unit 12 takes in air.

As illustrated in Fig. 2, in the assembled state, a part of motor unit 14 is inserted into fan unit 12. A part of motor unit 14 mentioned herein includes a part (specifically, a part of member 61 to be described later) of motor case 6 constituting an outer shell of motor unit 14.

Hereinafter, specific configurations of fan unit 12 and motor unit 14 will be further described.

### (1-2) Fan unit

Fan unit 12 includes centrifugal fan 2 and fan case 3 that rotatably houses centrifugal fan 2. In blower 1, centrifugal fan 2 and fan case 3 are made of resin. However, centrifugal fan 2 may be made of metal in whole or part, or fan case 3 may be made of metal in whole or part.

Centrifugal fan 2 includes hub 21 and a plurality of blades 23. In blower 1, centrifugal fan 2 is a sirocco fan. Hereinafter, an orientation on a first side along the axis of centrifugal fan 2 is referred to as first orientation D1. An orientation on a second side is an opposite direction to the orientation on the first side along the axis of centrifugal fan 2 is referred to as second orientation D2.

In the assembled state, fan unit 12 is positioned in first orientation D1 with respect to motor unit 14. Motor unit 14 is positioned in second orientation D2 with respect to fan unit 12.

Hub 21 of centrifugal fan 2 has a shape recessed in first orientation D1. In the assembled state, a part (specifically, a part of member 61 to be described later) of motor case 6 is disposed inside the recess of hub 21.

A central portion of hub 21 is positioned closest to first orientation D1 in entire hub 21. Hub 21 includes coupling part 215 constituting the central portion of hub 21. Coupling part 215 is a portion into which one end of rotary shaft 514 in an axial direction is fitted. One end of rotary shaft 514 in an axial direction is integrally rotatably coupled to coupling part 215.

Hub 21 further includes bottom wall 216 positioned to surround coupling part 215 over the entire circumference. Bottom wall 216 extends to a radially outer side of hub 21 from an outer peripheral portion of coupling part 215. The entire portion of bottom wall 216 on a radially inner side is inclined such that a portion closer to coupling part 215 is positioned closer to first orientation D1.

Each of the plurality of blades 23 is provided integrally with a portion of bottom wall 216 of hub 21 on a radially outer side. Each of the plurality of blades 23 extends in first orientation D1 from the portion of bottom wall 216 of hub 21 on the radially outer side. The plurality of blades 23 are arrayed at intervals in a circumferential direction.

Fan case 3 includes inlet port 34 for sucking outside air, discharge port 35 for discharging air toward an external space, and flow path 36 connecting inlet port 34 and discharge port 35. When centrifugal fan 2 rotates inside fan case 3, the air sucked in second orientation D2 through inlet port 34 is guided to discharge port 35 along flow path 36.

Fan case 3 includes first member 31 constituting a half of fan case 3 and second member 32 constituting another half of fan case 3. Fan case 3 is formed by fitting first member 31 and second member 32. First member 31 constitutes a half of fan case 3 on first orientation D1 side. Second member 32 constitutes a half of fan case 3 on second orientation D2 side.

Inlet port 34 is included in first member 31. Inlet port 34 is opened in first orientation D1. Discharge port 35 is opened in a direction orthogonal to first orientation D1. Discharge port 35 is formed when first member 31 and second member 32 are fitted to each other. Flow path 36 has a spiral shape surrounding a periphery of centrifugal fan 2. Flow path 36 is formed when first member 31 and second member 32 are fitted to each other.

Fan case 3 further includes connecting part 33. Connecting part 33 is a portion to which motor unit 14 is connected. Connecting part 33 is included in second member 32. When first member 31 and second member 32 are fitted, connecting part 33 included in second member 32 faces inlet port 34 included in first member 31.

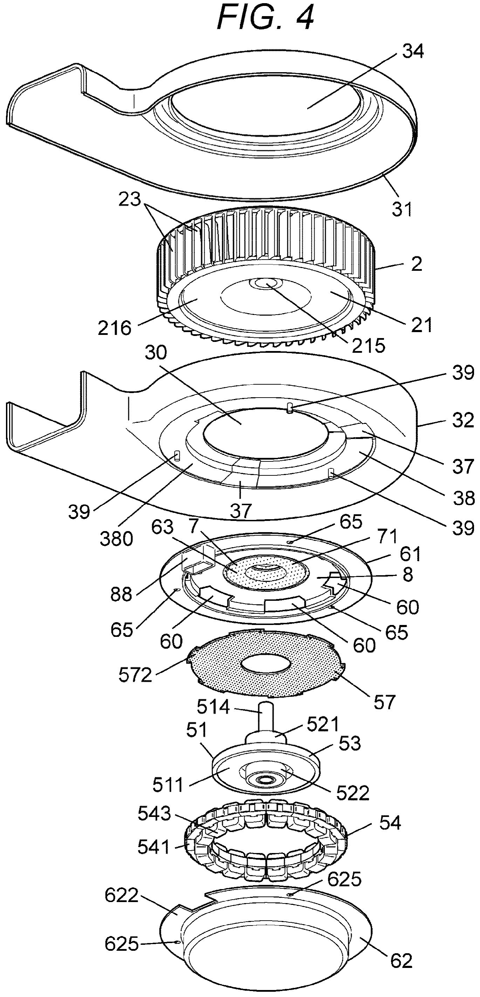

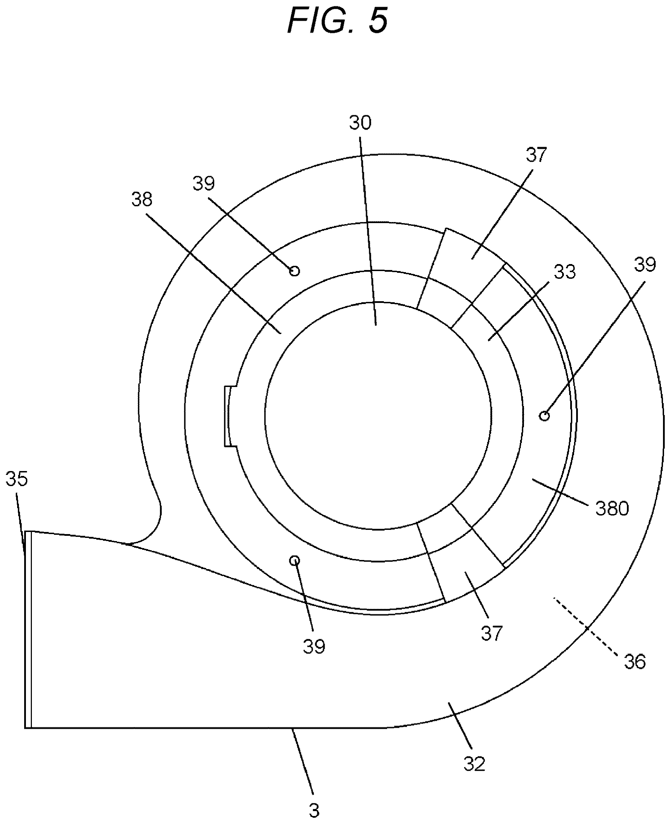

Fig. 4 is an exploded perspective view of blower 1 of the exemplary embodiment. Fig. 5 is a rear view of fan case 3 included in blower 1. Connecting part 33 includes wall 38 at a position facing inlet port 34 and connection opening 30 surrounded by wall 38 (see Figs. 4 and 5).

Opening 30 is an opening having a circular shape facing inlet port 34. The axis of centrifugal fan 2 is set to pass through a central portion of opening 30. Opening 30 is an opening for inserting a part (specifically, a part of member 61 to be described later) of motor case 6 constituting the outer shell of motor unit 14 into fan case 3.

Wall 38 is positioned around opening 30. Opening 30 is constituted by a hole penetrating the center portion of wall 38. Wall 38 includes surface 380 having an annular shape surrounding opening 30. An orientation of surface 380 of wall 38 is second orientation D2.

A plurality of recesses 37 for forming auxiliary air ducts 45 to be described later and projections 39 for attaching motor unit 14 are provided in surface 380.

In blower 1, the plurality of recesses 37 are formed at a distance from each other in a circumferential direction surrounding opening 30. More specifically, the plurality of recesses 37 are two recesses 37 positioned at a distance from each other in the circumferential direction. Each recess 37 has a shape radially extending to the radially outer side from a peripheral edge of opening 30. That is, each recess 37 is formed to be wider at a portion farther from opening 30.

In blower 1, the plurality of projections 39 are formed at a distance from each other in the circumferential direction surrounding opening 30. More specifically, the plurality of projections 39 are three projections 39 positioned at a distance from each other in the circumferential direction. Each projection 39 has a pin shape protruding in second orientation D2.

In the circumferential direction surrounding opening 30, a region where the plurality of recesses 37 are formed and a region where the plurality of projections 39 are formed are different from each other. In the circumferential direction surrounding opening 30, at least one projection 39 is positioned in regions on both sides sandwiching each recess 37.

### (1-3) Motor unit

Motor unit 14 includes an inner rotor type brushless motor. Motor unit 14 is integrally assembled to fan unit 12 in order to rotationally drive centrifugal fan 2 included in fan unit 12. Centrifugal fan 2 is rotationally driven around the axis of centrifugal fan 2 along with the rotation of rotor 51 included in motor unit 14.

Motor unit 14 includes electrical mechanism 5 for rotating centrifugal fan 2 and motor case 6 housing electrical mechanism 5.

Electrical mechanism 5 includes rotor 51, bearing 521, another bearing 522, stator 54, circuit board 57, and insulating member 56. Hereinafter, bearing 521 is referred to as first bearing 521, and bearing 522 is referred to as second bearing 522.

### (1-4) Rotor

Rotor 51 includes rotor core 511 having an annular shape in which magnets are disposed, and rotary shaft 514 coupled to rotor core 511. Rotor core 511 and rotary shaft 514 are integrally rotatable about an axis of rotary shaft 514.

An end of rotary shaft 514 on first orientation D1 side protrudes to an outside of motor case 6. The end of rotary shaft 514 on first orientation D1 side is fitted into coupling part 215 of centrifugal fan 2 to be integrally rotatable. Accordingly, centrifugal fan 2 can rotate integrally with rotor 51 (that is, rotor core 511 and rotary shaft 514).

### (1-5) First bearing

First bearing 521 rotatably supports an intermediate portion of rotary shaft 514 in an axial direction, and rotatably supports rotor 51. In motor unit 14, first bearing 521 is a ball bearing.

First bearing 521 is fitted in a part (specifically, a part of member 61 to be described later) of motor case 6.

A portion of rotary shaft 514 rotatably supported by first bearing 521 is positioned closer to first orientation D1 than a portion of rotary shaft 514 coupled to rotor core 511.

### (1-6) Second bearing

Second bearing 522 rotatably supports an end of rotary shaft 514 on second orientation D2 side, and rotatably supports rotor 51. In motor unit 14, second bearing 522 is a ball bearing. Rotor 51 is rotatably supported by first bearing 521 and second bearing 522.

Second bearing 522 is fitted in a part (specifically, a part of member 62 to be described later) of motor case 6. Second bearing 522 is positioned in second orientation D2 with respect to first bearing 521.

A portion of rotary shaft 514 rotatably supported by second bearing 522 is positioned closer to second orientation D2 than a portion of rotary shaft 514 coupled to rotor core 511.

### (1-7) Stator

Stator 54 faces rotor 51. Stator 54 is configured to supply a magnetic force that rotates rotor 51. Stator 54 includes stator core 541 and winding 543 wound around stator core 541. Stator 54 is disposed on a radially outer side of rotor 51.

Stator 54 is in contact with motor case 6 in a thermally conductive manner. Specifically, an outer peripheral surface of stator core 541 is in contact with an inner peripheral surface of motor case 6 (specifically, an inner peripheral surface of member 62) in a thermally conductive manner. Motor case 6 and stator core 541 may be thermally coupled by direct contact, or may be thermally coupled with a member having thermal conductivity interposed therebetween.

### (1-8) Circuit board

Circuit board 57 is configured to control energization of stator 54. Circuit board 57 is disposed closer to first orientation D1 than rotor core 511. Circuit board 57 is disposed closer to first orientation D1 than stator 54.

In the assembled state, circuit board 57 is positioned between centrifugal fan 2 and rotor core 511. Circuit board 57 is positioned between centrifugal fan 2 and stator 54.

As illustrated in Fig. 4, circuit board 57 has an annular shape. An outer diameter of circuit board 57 having the annular shape is smaller than an outer diameter of stator 54 having an annular shape and is larger than an outer diameter of rotor 51. An inner diameter of circuit board 57 is smaller than an inner diameter of stator 54 and is smaller than the outer diameter of rotor 51.

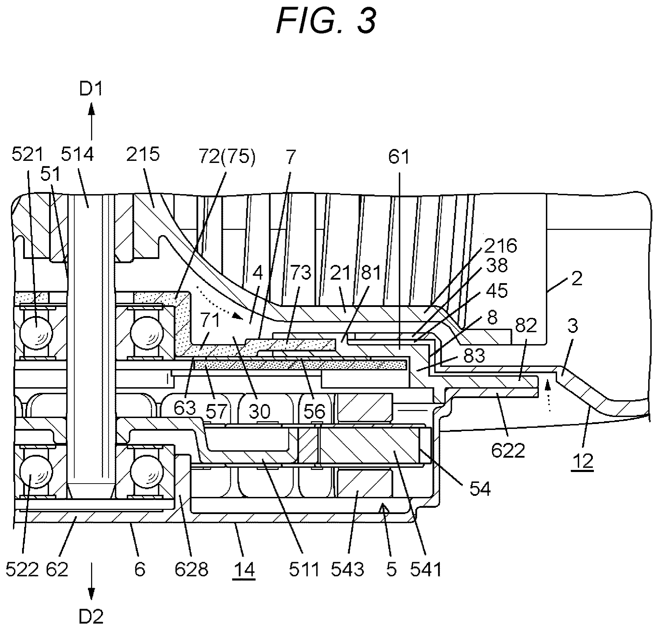

Fig. 3 is an enlarged view of a main part of Fig. 2. As illustrated in Fig. 3, circuit board 57 can thermally conduct motor case 6 (specifically, member 61) via insulating member 56 having a sheet shape. The heat transferred from circuit board 57 to motor case 6 via insulating member 56 is dissipated through an outer surface of motor case 6 (mainly an outer surface of member 61).

### (1-9) Insulating member

Insulating member 56 has electric insulation. Insulating member 56 is a member having a sheet shape and having thermal conductivity. Insulating member 56 has an annular shape.

Insulating member 56 is disposed between circuit board 57 and motor case 6. Insulating member 56 is disposed between circuit board 57 and member 61. More specifically, insulating member 56 is disposed between circuit board 57 and metal portion 7 constituting thermally conductive portion 63 to be described later.

An outer diameter of insulating member 56 having the annular shape is smaller than an outer diameter of stator 54 having the annular shape and is larger than the outer diameter of rotor 51. The outer diameter of insulating member 56 is smaller than an outer diameter of circuit board 57. An inner diameter of insulating member 56 is smaller than the inner diameter of stator 54 and is larger than the inner diameter of circuit board 57.

As viewed from an axial direction of rotary shaft 514, entire insulating member 56 is positioned to overlap circuit board 57. As viewed from the axial direction of rotary shaft 514, entire insulating member 56 is positioned to overlap member 61.

### (1-10) Motor case

Motor case 6 is a case that houses rotor 51, first bearing 521, second bearing 522, stator 54, circuit board 57, and insulating member 56.

Motor case 6 is formed by fitting member 61 having an annular shape and forming air duct 4 between the motor case and centrifugal fan 2 and another member 62 having a cup shape. Hereinafter, member 61 is referred to as first member 61. Member 62 is referred to as second member 62. First member 61 is a member constituting a half of motor case 6 on a side close to fan unit 12. Second member 62 is a member constituting a half of motor case 6 on a side away from fan unit 12.

An opening opened in first orientation D1 is formed in second member 62. The opening of second member 62 having the cup shape is covered with first member 61 having a lid shape. As a result, motor case 6 is formed.

Second member 62 includes outer peripheral edge portion 622 having a flange shape. A plurality of through-holes 625 for positioning are formed in outer peripheral edge portion 622 (see Fig. 4). In motor unit 14, the plurality of through-holes 625 are formed at a distance from each other in a circumferential direction. More specifically, the plurality of through-holes 625 are three through-holes 625 positioned at a distance from each other in the circumferential direction. Corresponding one projection 39 among three projections 39 of fan case 3 is inserted into each through-hole 625.

First bearing 521, insulating member 56, and circuit board 57 are assembled to first member 61. Second bearing 522, rotor 51, and stator 54 are assembled to second member 62.

First member 61 includes thermally conductive portion 63 and resin portion 8 provided integrally with thermally conductive portion 63. Thermally conductive portion 63 is metal portion 7 having thermal conductivity.

A galvanized steel sheet can be used as the metal constituting metal portion 7. Poly butylene terephthalate (PBT) or polypropylene (PP) can be used as the resin constituting resin portion 8.

### (1-11) Metal portion

Metal portion 7 constituting thermally conductive portion 63 is a metal member constituting a part of first member 61. Metal portion 7 constitutes a portion of first member 61 on a radially inner side. In motor unit 14, a half of first member 61 on the radially inner side is constituted by metal portion 7 having an annular shape.

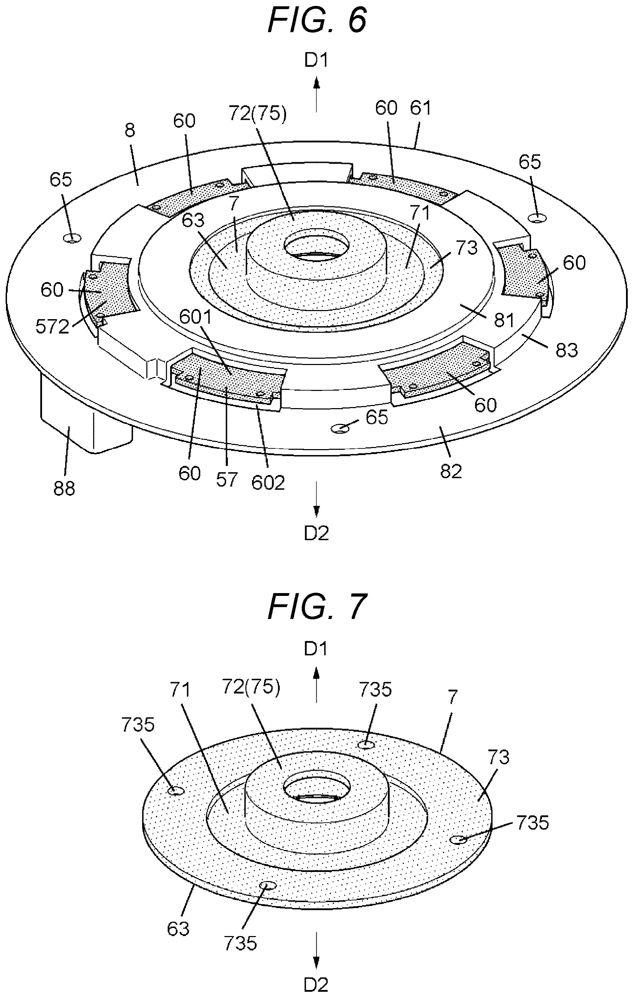

Fig. 7 is a perspective view of metal portion 7 included in first member 61 included in blower 1 of the exemplary embodiment. As illustrated in Figs. 3, 7, and the like, metal portion 7 having the annular shape includes first portion 71 having an annular shape provided in an intermediate portion in a radial direction, second portion 72 provided on a radially inner side with respect to first portion 71, and third portion 73 provided on a radially outer side with respect to first portion 71. Second portion 72 is a portion provided on a radially innermost side of metal portion 7. Third portion 73 is a portion provided on a radially outermost side of metal portion 7.

First portion 71 of metal portion 7 is formed in a flat annular plate shape to connect second portion 72 and third portion 73. First portion 71 has a shape recessed in second orientation D2 as compared with a portion around metal portion 7. First portion 71 of metal portion 7 protrudes in second orientation D2 with respect to second portion 72 and third portion 73 to have a shape recessed downward in Fig. 3.

First portion 71 is a portion coming into contact with circuit board 57 in a thermally conductive manner. In other words, first portion 71 is a main portion of metal portion 7. For example, as illustrated in Fig. 3, insulating member 56 is brought into contact with a surface of first portion 71 on second orientation D2 side. In motor unit 14, first portion 71 of metal portion 7 and circuit board 57 come into contact with each other, via insulating member 56, in a thermally conductive manner. Here, the contact between metal portion 7 and circuit board 57 in the thermally conductive manner includes a case where insulating member 56 is interposed between metal portion 7 and circuit board 57. Metal portion 7 and circuit board 57 may be thermally coupled via insulating member 56.

Second portion 72 of metal portion 7 has a shape protruding in first orientation D1 from an end of first portion 71 on a radially inner side. Second portion 72 protrudes in first orientation D1 with respect to first portion 71 to have a shape protruding upward in Fig. 3. Second portion 72 constitutes metallic holder 75 that holds first bearing 521 inside thereof. First bearing 521 is fitted into an inner peripheral surface of holder 75, and thus, first bearing 521 is held by metal portion 7.

Third portion 73 of metal portion 7 has a shape slightly protruding in first orientation D1 from an end of first portion 71 on a radially outer side. Third portion 73 slightly protrudes in first orientation D1 with respect to first portion 71 to have a shape protruding upward in Fig. 3. A dimension of third portion 73 protruding from first portion 71 in first orientation D1 is smaller than a dimension of second portion 72 protruding from first portion 71 in first orientation D1.

Third portion 73 is a portion mechanically coupled to resin portion 8. As illustrated in Fig. 7, through-holes 735 into which the resin enters in insert molding are formed in third portion 73. A plurality of through-holes 735 are formed in motor unit 14 at a distance from each other in a circumferential direction. Specifically, the plurality of through-holes 735 are four through-holes 735 positioned at equal distances in the circumferential direction.

### (1-12) Resin portion

Resin portion 8 is a portion made of resin constituting a part of first member 61. Resin portion 8 constitutes a portion of first member 61 on a radially outer side. In motor unit 14, a half of first member 61 on the radially outer side is constituted by resin portion 8.

Fig. 6 is a perspective view of first member 61 and circuit board 57 included in blower 1 of the exemplary embodiment. For example, as illustrated in Figs. 3 and 6, resin portion 8 having an annular shape includes inner peripheral portion 81 having an annular shape and constituting a portion of resin portion 8 on a radially inner side, outer peripheral portion 82 having an annular shape and constituting a portion of resin portion 8 on a radially outer side, and coupling portion 83 having a tubular shape and connecting inner peripheral portion 81 and outer peripheral portion 82.

Inner peripheral portion 81 of resin portion 8 is positioned in first orientation D1 with respect to outer peripheral portion 82. Coupling portion 83 extends in second orientation D2 from an end of inner peripheral portion 81 on a radially outer side. In other words, coupling portion 83 extends in first orientation D1 from an end of outer peripheral portion 82 on a radially inner side. Outer peripheral portion 82 extends in a flange shape to a radially outer side from an end of coupling portion 83 on second orientation D2 side.

Inner peripheral portion 81 of resin portion 8 is a portion mechanically coupled to metal portion 7. Specifically, the portion of inner peripheral portion 81 on the radially inner side is mechanically coupled to third portion 73 of metal portion 7 by insert molding. For example, as illustrated in Fig. 3, insulating member 56 is brought into contact with a surface of inner peripheral portion 81 on second orientation D2 side. In motor unit 14, inner peripheral portion 81 of resin portion 8 and circuit board 57 are in contact with each other, via insulating member 56, in a thermally conductive manner. In other words, resin portion 8 and circuit board 57 are thermally coupled via insulating member 56.

Outer peripheral portion 82 of resin portion 8 is overlapped with outer peripheral edge portion 622 of second member 62 made of metal. A plurality of through-holes 65 for positioning are formed in outer peripheral portion 82 of resin portion 8 (see Fig. 6). In motor unit 14, the plurality of through-holes 65 are formed at a distance from each other in a circumferential direction. More specifically, the plurality of through-holes 65 are three through-holes 65 positioned at a distance from each other in the circumferential direction. Corresponding projection 39 of three projections 39 of fan case 3 is inserted into each through-hole 65 (see Fig. 4).

Further, a plurality of holes 60 from which a part of circuit board 57 is exposed are formed in resin portion 8. A part of circuit board 57 exposed from hole 60 includes a portion for soldering a lead wire. In motor unit 14, the plurality of holes 60 are formed at a distance from each others in a circumferential direction. The plurality of holes 60 are six holes 60 positioned at a distance from each other in the circumferential direction.

As illustrated in Fig. 6, each hole 60 is formed from inner peripheral portion 81 to coupling portion 83 of resin portion 8. Each hole 60 includes, in series, first hole portion 601 formed in the portion of inner peripheral portion 81 on the radially outer side and second hole portion 602 formed in coupling portion 83. First hole portion 601 is opened in first orientation D1. Second hole portion 602 is opened to a radially outer side.

As illustrated in Fig. 3, in the assembled state, circuit board 57 is positioned closer to a radially inner side of coupling portion 83 of resin portion 8.

A part of circuit board 57 exposed from each hole 60 is included in portion 572 of circuit board 57 on a radially outermost side (see Fig. 6). A portion of portion 572 of circuit board 57, which is not exposed from each hole 60, has a shape recessed to a radially inner side with respect to a portion exposed from each hole 60. In a state where circuit board 57 is assembled to first member 61, a part of circuit board 57 is exposed from each hole 60 of first member 61. As a result, it is possible to solder a lead wire to circuit board 57 through each hole 60.

On outer peripheral portion 82 of resin portion 8, connector housing 88 is molded to protrude in second orientation D2. Connection terminals are housed in connector housing 88. For example, an external power supply is connected to the connection terminal. Power supplied from the external power supply is supplied to stator 54 through the connection terminal and circuit board 57.

### (1-13) Air duct

As illustrated in Fig. 3, air duct 4 is formed between motor case 6 and centrifugal fan 2. Specifically, air duct 4 is formed between a portion of first member 61 of motor case 6 inserted into fan case 3 through opening 30 of fan case 3 and hub 21 of centrifugal fan 2.

Air duct 4 faces metal portion 7 constituting a part of first member 61. Air duct 4 faces inner peripheral portion 81 of resin portion 8 constituting another part of first member 61. In blower 1, with the rotation of centrifugal fan 2, a flow of air directed to a radially outer side is generated in air duct 4 as indicated by a broken line arrow in Fig. 3. Heat generated in circuit board 57 during operation is transferred to metal portion 7 and resin portion 8 via insulating member 56. The heat generated in circuit board 57 is effectively dissipated to the air flowing through air duct 4 through metal portion 7 and resin portion 8. The heat generated in circuit board 57 is dissipated mainly through metal portion 7.

In addition, auxiliary air ducts 45 connected to air duct 4 are formed in blower 1. Auxiliary air duct 45 is formed between motor case 6 and fan case 3. Specifically, auxiliary air duct 45 are formed between a portion of first member 61 of motor case 6, which is not inserted into fan case 3 through opening 30 of fan case 3, and wall 38 surrounding opening 30 of fan case 3.

Auxiliary air ducts 45 are not formed over the entire circumference, but are formed only in a plurality of regions at a distance from each other in a circumferential direction. In blower 1, auxiliary air ducts 45 are formed between two recesses 37 (see Fig. 4) provided in wall 38 and resin portion 8 of first member 31 of fan case 3. Each of two auxiliary air ducts 45 is an air duct communicating with opening 30 and communicating with an external space. Auxiliary air ducts 45 are formed to radially extend to a radially outer side from the peripheral edge of opening 30. That is, auxiliary air duct 45 is formed to be wider at a portion farther from opening 30.

In blower 1, hole 60 is not provided in resin portion 8 at a portion facing each recess 37 of fan case 3. Thus, auxiliary air duct 45 is formed between a portion of motor case 6 where hole 60 is not formed and fan case 3. In the assembled state, each hole 60 of resin portion 8 is covered with fan case 3.

In blower 1, through-hole 65 is not provided in resin portion 8 at a portion facing each recess 37 of fan case 3. Thus, auxiliary air duct 45 is formed between a portion of motor case 6 where through-hole 65 is not formed and fan case 3.

In blower 1, when centrifugal fan 2 rotates, an inside of fan case 3 has a negative pressure, and thus, a flow of air from an external space toward the inside of fan case 3 is generated through auxiliary air duct 45 as indicated by the broken line arrow in Fig. 3. The flow of air is generated in auxiliary air duct 45 connected to air duct 4, and thus, the flow of air in air duct 4 is easily secured. As a result, heat is easily dissipated to the air flowing through air duct 4.

The flow of air generated in auxiliary air duct 45 may be reversed depending on a structure of blower 1 or various driving conditions. However, in this case, the air also flows easily to air duct 4 by the flow of air in auxiliary air duct 45. As a result, heat is easily dissipated to the air flowing through air duct 4.

### (1-14) Assembly procedure

A method for assembling blower 1 including motor unit 14 having the above configuration includes a first step, a second step, a third step, a fourth step, and a fifth step.

In the first step, stator 54 including stator core 541 and the winding 543 is fitted into second member 62 having the cup shape made of metal (see, for example, Fig. 4).

In the second step, rotor unit 53 illustrated in Fig. 4 is fitted into second member 62. Rotor unit 53 is a unit in which rotor 51 including rotor core 511 and rotary shaft 514, and first bearing 521 and second bearing 522 are integrally assembled. Second bearing 522 of rotor unit 53 is held by second member 62 by being fitted into metallic holder 628 (see Fig. 3) formed at a central portion of second member 62.

In the third step, circuit board 57 is fitted into first member 61 via insulating member 56. Circuit board 57 may be fixed to first member 61 by thermal welding or may be fixed to first member 61 by screwing. Circuit board 57 can also be molded integrally with first member 61. In this case, the third step is omitted.

In the fourth step, second member 62 into which stator 54 and rotor unit 53 are fitted, first member 61 into which circuit board 57 and insulating member 56 are fitted, and second member 32 of fan case 3 are integrally assembled. At this time, three projections 39 protruding from second member 32 are inserted into three through-holes 65 formed in first member 61 on a one-to-one basis. Three projections 39 protruding from second member 32 are inserted into three through-holes 625 formed in second member 62 on a one-to-one basis. First bearing 521 of rotor unit 53 is held by first member 61 by being fitted into metallic holder 75 (see Fig. 3) formed at a central portion of first member 61.

In the fifth step, first member 31 is assembled to second member 32 to which motor unit 14 is integrally assembled through the first to fourth steps in a state where centrifugal fan 2 is sandwiched. As a result, blower 1 having the above configuration is formed. Note that, the first to fifth steps are not necessarily executed in this order.

In motor unit 14, circuit board 57 is first assembled to first member 61 as described above to constitute a sub-assembly including first member 61 and circuit board 57. As a result, it is possible to suppress variations in relative positions of first member 61 and circuit board 57. Accordingly, it is possible to more reliably achieve the thermal coupling between metal portion 7 and circuit board 57. Electrical connection between circuit board 57 and stator 54 can be easily performed by soldering the lead wire to circuit board 57 through each hole 60 of first member 61.

### (1-15) Moving body

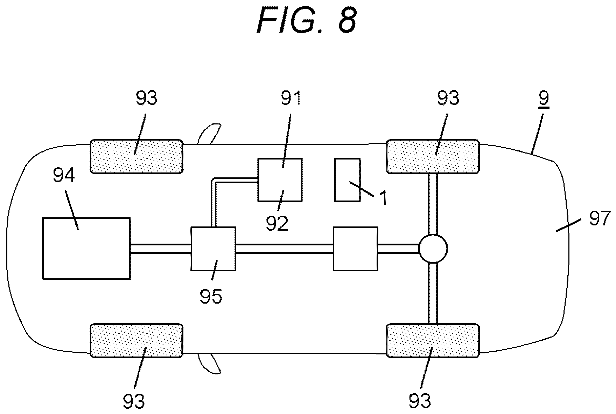

Fig. 8 is a conceptual diagram of moving body 9 on which blower 1 of the exemplary embodiment is mounted. Moving body 9 includes blower 1, cooling target object 91 to be cooled by blower 1, and vehicle body 97 on which blower 1 and cooling target object 91 are mounted. Cooling target object 91 is, for example, battery 92.

Moving body 9 is a hybrid four-wheeled automobile including a plurality of wheels 93, and engine 94 and motor 95 for rotationally driving the wheels. Battery 92 is configured to supply power to motor 95. Moving body 9 may be, for example, another type of four-wheeled automobile such as an electric automobile.

Moving body 9 on which blower 1 is mounted is not limited to the four-wheeled automobile, and may be, for example, a vehicle (automobile) such as a two-wheeled automobile or a three-wheeled automobile. Cooling target object 91 may be a part other than battery 92.

### (2) Modifications

Modifications of blower 1 are listed below. In each modification of blower 1, the same reference marks are given to configurations common to the configurations of blower 1 described above, and a detailed description thereof will be omitted.

Motor unit 14 is an inner rotor type. However, the configuration of motor unit 14 is not limited thereto. For example, motor unit 14 may be an outer rotor type. In this case, for example, entire first member 61 is constituted by metal portion 7 or the portion of first member 61 on the radially outer side is constituted by metal portion 7, circuit board 57 comes into contact with metal portion 7 in the thermally conductive manner, and metal portion 7 is configured to face air duct 4. As a result, the heat dissipation of motor unit 14 is enhanced.

In motor unit 14, circuit board 57 and metal portion 7 are thermally coupled via insulating member 56 having the sheet shape. However, a form of the thermal coupling between circuit board 57 and metal portion 7 is not limited thereto. For example, circuit board 57 and metal portion 7 may be thermally coupled by coming into direct contact with each other.

In motor unit 14, motor case 6 includes first member 61 and second member 62. However, a form of motor case 6 is not limited thereto. For example, motor case 6 may include one or more members different from first member 61 and second member 62.

In motor unit 14, hole 60 is formed in resin portion 8 of motor case 6. However, a form of hole 60 is not limited thereto. For example, entire first member 61 may include metal portion 7, and hole 60 may be formed in metal portion 7.

In motor unit 14, holder 75 for holding first bearing 521 is constituted by a part of metal portion 7 of first member 61. Holder 628 for holding second bearing 522 is constituted by a part of second member 62 made of metal. However, forms of holders 75 and 628 are not limited thereto. For example, holder 75 may be formed separately from metal portion 7. Holder 628 may be formed separately from second member 62.

In motor unit 14, first member 61 including metal portion 7 and resin portion 8 is integrally molded. However, a method for molding first member 61 is not limited thereto. In the method for molding first member 61, metal portion 7 and resin portion 8 may be fixed by another method such as thermal welding or screw fixing.

In motor unit 14, resin portion 8 includes connector housing 88, and connector housing 88 is molded together when first member 61 is molded by integral molding. However, connector housing 88 may be formed separately from first member 61.

### (3) Conclusions

As described above, motor unit (14) according to a first aspect is motor unit (14) for rotationally driving centrifugal fan (2), and includes rotor (51), stator (54) facing rotor (51), circuit board (57) configured to control energization of stator (54), and motor case (6) that houses rotor (51), stator (54), and circuit board (57). Motor case (6) includes member (61) constituting air duct (4) between the motor case (6) and centrifugal fan (2). At least a part of member (61) constituting air duct (4) is thermally conductive portion (63) that comes into contact with circuit board (57) in a thermally conductive manner.

In accordance with this aspect, the heat generated in circuit board (57) is conducted to thermally conductive portion (63), and is effectively dissipated to the air flowing through air duct (4) through thermally conductive portion (63). Thus, heat dissipation of motor unit (14) can be enhanced. As a result, the input power to motor unit (14) can be increased to achieve high output. The necessity of using a high heat resistant component as a circuit component is reduced. Accordingly, a degree of freedom of design is increased, and cost reduction is easily achieved.

In the first aspect, in motor unit (14) according to a second aspect, thermally conductive portion (63) is metal portion (7).

In accordance with this aspect, the heat generated in circuit board (57) is conducted to metal portion (7), and is effectively dissipated to the air flowing through air duct (4) through metal portion (7).

In the second aspect, motor unit (14) according to a third aspect further includes insulating member (56) disposed between circuit board (57) and metal portion (7). Metal portion (7) is in contact with circuit board (57), via insulating member (56), in the thermally conductive manner.

In accordance with this aspect, insulation between circuit board (57) and metal portion (7) can be secured via insulating member (56).

In any one of the first to third aspects, in motor unit (14) according to a fourth aspect, hole (60) from which a part of circuit board (57) is exposed is provided in motor case (6).

In accordance with this aspect, a lead wire can be soldered to circuit board (57) through hole (60) of motor case (6) in a state where circuit board (57) is in contact with metal portion (7) constituting a part of motor case (6) in a thermally conductive manner.

In the second or third aspect, in motor unit (14) according to a fifth aspect, member (61) constituting air duct (4) includes metal portion (7) and resin portion (8) provided integrally with metal portion (7).

In accordance with this aspect, it is possible to achieve weight reduction of entire motor case (6) while achieving high heat dissipation of motor unit (14).

In the second, third, or fifth aspect, in motor unit (14) according to a sixth aspect, metal portion (7) constitutes a portion of member (61) constituting air duct (4) on a radially inner side.

In accordance with this aspect, for example, even in a case where many heat generating components are disposed on a radially inner side of circuit board (57) as in inner rotor type motor unit (14), heat generated from these heat generating components can be efficiently transmitted to metal portion (7) constituting the portion of member (61) on the radially inner side.

In a second, third, fifth, or sixth aspect, motor unit (14) according to a seventh aspect further includes bearing (521) that rotatably supports rotor (51). A part of metal portion (7) constitutes metallic holder (75) that holds bearing (521).

In accordance with this aspect, bearing (521) can be firmly supported by metallic holder (75). In addition, since holder (75) is a part of metal portion (7), an increase in the number of components can be suppressed.

Blower (1) according to an eighth aspect includes motor unit (14) according to any one of the first to seventh aspects, centrifugal fan (2) rotationally driven by rotor (51), and fan case (3) that rotatably houses centrifugal fan (2).

In accordance with this aspect, heat generated in circuit board (57) of motor unit (14) included in blower (1) is conducted to metal portion (7), and is effectively dissipated to the air flowing through air duct (4) through metal portion (7). Thus, heat dissipation of motor unit (14) can be enhanced. As a result, the output of blower (1) can be increased by increasing the input power to motor unit (14), and the necessity of using a high heat resistant component as a circuit component is reduced. As a result, the degree of freedom in design is increased, and the cost can be easily reduced.

In the eighth aspect, blower (1) according to a ninth aspect further includes auxiliary air duct (45) connected to air duct (4). Auxiliary air duct (45) is provided between motor case (6) and fan case (3).

In accordance with this aspect, the flow of air in air duct (4) is easily secured. Accordingly, heat is easily dissipated to the air flowing through air duct (4).

In the ninth aspect, in blower (1) according to a tenth aspect, hole (60) from which a part of circuit board (57) is exposed is provided in motor case (6). Auxiliary air duct (45) is provided between a portion of motor case (6) where hole (60) is not provided and fan case (3).

In accordance with this aspect, a lead wire can be soldered to circuit board (57) through hole (60) of motor case (6) in a state where circuit board (57) is in contact with metal portion (7) constituting a part of motor case (6) in a thermally conductive manner. In addition, auxiliary air duct (45) is provided to avoid a portion of motor case (6) where hole (60) is provided. Accordingly, entry of foreign matter flowing through auxiliary air duct (45) into motor case (6) through hole (60) is suppressed.

In the eighth or ninth aspect, in blower (1) according to an eleventh aspect, hole (60) from which a part of circuit board (57) is exposed is provided in motor case (6). Hole (60) is covered with fan case (3).

In accordance with this aspect, a lead wire can be soldered to circuit board (57) through hole (60) of motor case (6) in a state where circuit board (57) is in contact with metal portion (7) constituting a part of motor case (6) in a thermally conductive manner. Moreover, hole (60) of motor case (6) is covered with fan case (3). Accordingly, entry of foreign matter into motor case (6) through hole (60) is suppressed.

Moving body (9) according to a twelfth aspect includes blower (1) according to any one of the eighth to eleventh aspects, cooling target object (91) to be cooled by blower (1), and vehicle body (97) where blower (1) and cooling target object (91) are mounted.

In accordance with this aspect, in blower (1) mounted on moving body (9), the heat generated in circuit board (57) of motor unit (14) is conducted to metal portion (7), and is effectively dissipated to the air flowing through air duct (4) through metal portion (7). Thus, heat dissipation of motor unit (14) can be enhanced. As a result, the output of blower (1) can be increased by increasing the input power to motor unit (14). The necessity of using a high heat resistant component as a circuit component is reduced. Accordingly, the degree of freedom of design is increased, and the cost reduction is easily achieved.

### INDUSTRIAL APPLICABILITY

The technology of the present disclosure can be applied to a blower capable of enhancing heat dissipation of a motor unit, and can be widely used for a moving body such as an automobile on which the blower is mounted.

### REFERENCE MARKS IN THE DRAWINGS

1: blower
12: fan unit
14: motor unit
2: centrifugal fan
21: hub
215: coupling part
216: bottom wall
23: blade
3: fan case
30: opening
31: first member
32: second member
33: connecting part
34: inlet port
35: discharge port
36: flow path
37: recess
38: wall
380: surface
39: projection
4: air duct
45: auxiliary air duct
5: electrical mechanism
51: rotor
511: rotor core
514: rotary shaft
521: first bearing
522: second bearing
54: stator
541: stator core
543: winding
56: insulating member
57: circuit board
572: portion
6: motor case
60: hole
601: first hole portion
602: second hole portion
61: first member
62: second member
622: outer peripheral edge portion
625: through-hole
628: holder
63: thermally conductive member
65: through-hole
7: metal portion
71: first portion
72: second portion
73: third portion
735: through-hole
75: holder
8: resin portion
81: inner peripheral portion
82: outer peripheral portion
83: coupling portion
88: connector housing
9: moving body
91: cooling target object
92: battery
93: wheel
94: engine
95: motor
97: vehicle body

## Claims

1. A motor unit for rotationally driving a centrifugal fan, the motor unit comprising:
a rotor;
a stator facing the rotor;
a circuit board configured to control energization of the stator; and
a motor case that houses the rotor, the stator, and the circuit board,
wherein the motor case includes a member constituting an air duct between the motor case and the centrifugal fan, and
at least a part of the member constituting the air duct is a thermally conductive portion that comes into contact with the circuit board in a thermally conductive manner.

2. The motor unit according to Claim 1,
wherein the thermally conductive portion is a metal portion.

3. The motor unit according to Claim 2, further comprising
an insulating member disposed between the circuit board and the metal portion,
wherein the metal portion is in contact with the circuit board, via the insulating member, in the thermally conductive manner.

4. The motor unit according to Claim 2 or 3,
wherein a hole from which a part of the circuit board is exposed is provided in the motor case.

5. The motor unit according to Claim 2 or 3,
wherein the member constituting the air duct includes the metal portion and a resin portion provided integrally with the metal portion.

6. The motor unit according to Claim 5,
wherein the metal portion constitutes a portion of the member constituting the air duct on a radially inner side.

7. The motor unit according to Claim 2 or 3, further comprising
a bearing that rotatably supports the rotor,
wherein a part of the metal portion constitutes a metallic holder that holds the bearing.

8. A blower comprising:
the motor unit according to any one of Claims 1 to 7;
the centrifugal fan rotationally driven by the rotor; and
a fan case that rotatably houses the centrifugal fan.

9. The blower according to Claim 8, further comprising
an auxiliary air duct connected to the air duct,
wherein the auxiliary air duct is provided between the motor case and the fan case.

10. The blower according to Claim 9,
wherein a hole from which a part of the circuit board is exposed is provided in the motor case, and
the auxiliary air duct is provided between a portion of the motor case where the hole is not provided and the fan case.

11. The blower according to Claim 9,
wherein a hole from which a part of the circuit board is exposed is provided in the motor case, and
the hole is covered with the fan case.

12. A moving body comprising:
the blower according to Claim 8;
a cooling target object to be cooled by the blower; and
a vehicle body where the blower and the cooling target object are mounted.
